# EUROPEAN PATENT SPECIFICATION

(11) **EP 2 492 158 B1**
(45) Date of publication and mention of the grant of the patent: **08.04.2015**
(21) Application number: 11156164.3
(22) Date of filing: 28.02.2011
(51) Int. Cl.: B60R 22/195

(54) **Seat belt assembly**
Sitzgurtanordnung
Ensemble de ceinture de sécurité

(43) Date of publication of application: 29.08.2012
(73) Proprietor: Volvo Car Corporation, 40 531 Göteborg (SE)
(72) Inventor: Aldeborg, Gert, 45197, Uddevalla (SE); Adolfsson, Peter, 42244, Hisings Backa (SE)
(74) Representative: Kraenzmer, Martin

(56) References cited:
- EP-A1- 1 203 700
- DE-A1- 2 249 786
- DE-A1- 10 045 328
- US-A1- 2002 089 164

## Description

### TECHNICAL FIELD

The present disclosure relates to a safety belt system for a seat according to the preamble of claim 1. Moreover, the present disclosure relates to a seat assembly and a vehicle.

### BACKGROUND

Vehicle seats of today, such as seats for cars, lorries, aeroplanes etcetera, are often furnished with one or more safety belt systems. Generally, a front seat of a vehicle is provided with one safety belt system whereas a vehicle back seat may be provided with a plurality of seat belt systems.

Nowadays, safety belt systems also often comprise a safety belt tensioner adapted to tension the belt of the safety belt system in the event of a crash to thereby reduce the motion of an occupant of the seat equipped with the safety belt system.

In order to protect an occupant of a vehicle seat in an appropriate manner, the seat belt generally has to assume a suitable safety belt configuration prior to, or at least during the initial portion of, the possible crash. For instance for three or four point belts, such a suitable safety belt configuration generally implies that a portion of the safety belt which extends diagonally downwards towards the occupant's torso is located close to the neck of the occupant.

However, the above position of the diagonally extending portion of the safety belt generally results in reduced comfort for the occupant. For example, the diagonally extending portion of the safety belt may rub against the neck of the occupant. As such, it would be desirable to obtain a crash configuration and a comfort configuration of a safety belt system for a vehicle.

To this end, US 5,135,257 teaches that a safety belt system may be furnished with an attachment tab. During normal driving situations, the attachment tab lowers the diagonally extending portion of the belt to a comfort position and, in the event of a crash, the attachment tab will release such that the diagonal part of the safety belt system can assume a position which is suitable for a crash.

However, the '257 solution requires that the occupant performs an additional step, namely the attachment and/or adjustment of the attachment tab, when using the '257 safety belt system. This additional step may be perceived as time consuming and cumbersome.

DE10045328 A1 discloses a fitting having a guide arrangement on the upper free end of a flexiblen arm which is directed roughly upwards and which can bend under load from the belt in the event of a crash. A seat belt locking device, which is activated in the event of a crash, is located between the guide and the belt winding device. This prevents the belt being pulled out. The safety belt system of DE10045328 A1 is arranged such that the guide arrangement on the flexible arm is located at the same side of a transversal center plane as a second guide arrangement and a lower belt retainer. At the opposite side of the transversal center plane, the seat belt locking device is connected to a safety belt tensioner. Belt portions are arranged to pass over the person occupying the seat.

DE2249786 A1 relates to a safety mechanism for the occupants of vehicles, particularly of motor vehicles having a device which is releasable by a sensor for tightening the safety belt, which consists of a working cylinder the piston of which is movable by gas pressure and in connected to the safety belt.

US2002/0089164 A1 discloses a four-point seat belt restraint system having a lap belt movable between a comfort position wherein the portions of the belt extending over the outsides of the occupant's thighs are generally vertical, and a crash restraint position wherein the same portions extend at an angle downward and to the rear. Belt guides disposed adjacent opposite sides of the seat engage the lap belt as it extends from the anchor points toward the seat cushion.

EP1203700 A1 discloses a vehicle occupant protection system comprising a seat for seating a vehicle occupant in a passenger compartment of a vehicle, and a seat belt for restraining a vehicle occupant seated in the seat, the seat belt is pulled rearward by a power actuator in an early stage of a vehicle crash to apply deceleration to the vehicle occupant before the vehicle body has started decelerating so that the vehicle occupant is prevented from being subjected to a deceleration level which is higher than an unacceptable level of deceleration throughout the entire period of the vehicle crash.

### SUMMARY

One object of the disclosure is to reduce or ameliorate at least one of the disadvantages of the prior art, or to provide a useful alternative.

This object is achieved by a safety belt system according to claim 1.

As such, the present disclosure relates to a safety belt system for a seat. The seat has a vertical extension in a vertical direction and a transversal centre plane which, when a person occupies the seat, extends vertically between the person's left and right hand sides. The safety belt system comprises a belt, a first guide arrangement and a second guide arrangement and the safety belt system is configured such that when the safety belt system is mounted with a seat, the first and second guide arrangements are located on the same side of the transversal centre plane and the first guide arrangement is located above the second guide arrangement. The safety belt system further comprises a safety belt tensioner adapted to tension the belt in the event of a crash.

As used herein, the expression "guide arrangement" is an arrangement of the safety belt system to which a portion of the belt is attached and/or at which a portion of the safety belt deflects, i.e. changes direction. However, in preferred embodiments of the safety belt system of the present disclosure, the expression "guide arrangement" encompasses only arrangements at which a portion of the safety belt deflects.

The system further comprises a transversal direction which is perpendicular to the transversal centre plane and extends from the first guide arrangement towards the transversal centre plane. Furthermore, the system comprises a backward direction extending from the first guide arrangement in a direction perpendicular to both the vertical direction and the transversal direction such that the vertical direction, the transversal direction and the backward direction together form a right-handed system.

As used herein, the expression "right-handed system" relates to a system which satisfies the right-hand rule, viz the directions obtained if the thumb, index finger and middle finger of the right hand are held so that they form three right angles. As such, for the above three directions, the thumb may indicate the vertical direction, the index finger the backward direction and the middle finger the transversal direction.

In accordance with the present disclosure, the first guide arrangement comprises a compliant portion such that the first guide arrangement allows at least a belt portion of the belt, which belt portion is in contact with the first guide arrangement, to be displaced in a direction at least partially coinciding with the transversal direction and/or the backward direction when the reversible safety belt tensioner tensions the belt.

As used herein, the expression "compliant portion" encompasses any portion of the first guide arrangement that allows a displacement of the belt portion in response the tensioning of the belt. As such, the expression "compliant portion" is not intended to encompass any actuator or the like which may be actuated so as to actively displace the belt portion.

By means of a safety belt system according to the present disclosure, an appropriate comfort configuration of the safety belt may be obtained since, for instance, a diagonally extending portion of the safety belt may be located at a distance from an occupant's neck. However, in the event of a crash, that portion of the safety belt is displaced towards the occupant's neck such that an appropriate crash configuration of the safety belt system is obtained. The safety belt system according to the present disclosure implies that the crash configuration may be assumed before the occupant of the seat hosting the safety belt systems begins to move forward during a crash.

Moreover, the fact that the safety system according to the present disclosure comprises a compliant portion implies that the first guide arrangement may be configured so as to passively, i.e. without any actuator or the like, allow a displacement of the belt portion. This in turn indicates that the first guide arrangement may have a low weight and/or may be manufactured at a low cost.
The safety belt tensioner is located on the same side of the transversal centre plane as the first and second guide arrangements.
According to the present disclosure, the first guide arrangement may be adapted to allow a displacement of the belt portion in a direction at least partially coinciding with the transversal direction and/or the backward direction which is at least 0.2 times the width of the belt portion.

A displacement of the belt portion according to the above implies an appropriate distinction between a comfort configuration and a crash configuration of the safety belt system.

According to the present disclosure, the first guide arrangement may comprise a first guide point and may be configured such that the first guide point is displaced together with the belt portion of the belt when the safety belt tensioner tensions the belt.

According to the present disclosure, the first guide arrangement may comprise a resilient means adapted to allow the displacement of the first guide point when the safety belt tensioner tensions the belt.

The use of a resilient means in the first guide arrangement implies that the first guide arrangement may be reversible, i.e. that the first guide arrangement may reassume a position corresponding to a comfort configuration of the safety belt system when the seat belt tensioner has been deactivated.

According to the present disclosure, the first guide arrangement may be adapted to pivot to thereby achieve the displacement of the first guide point when the safety belt tensioner tensions the belt. Moreover, according to the present disclosure, the resilient means may comprise a torsion spring.

According to the present disclosure, the first guide arrangement may comprise a breakpin adapted to break when the safety belt tensioner tensions the belt.

According to the present disclosure, the first guide arrangement may comprise a slot having an extension in at least a direction perpendicular to the transversal centre plane which extension is at least 2 times, preferably 3 times, greater than the width of the belt.

According to the present disclosure, the first guide arrangement may comprise a first wall portion adapted to be located between the belt and the transversal centre plane. The first wall portion is adapted to rupture when the safety belt tensioner tensions the belt.

According to the present disclosure, the safety belt system may further comprise a third guide arrangement, the safety belt system being configured such that when the safety belt system is mounted with a seat, the third guide arrangement is located on the opposite side of the transversal centre plane compared to the first and second guide arrangements.

According to the present disclosure, at least a belt portion of the belt may be adapted to be displaced at least partially towards the transversal centre plane when the safety belt tensioner tensions said belt.

A second aspect of the present disclosure relates to a seat assembly, preferably a vehicle seat assembly, comprising a seat and a safety belt system according to the first aspect of the present disclosure.

A third aspect of the present disclosure relates to a vehicle comprising a seat assembly according to the second aspect of the present disclosure and/or a safety belt system according to the first aspect of the present disclosure.

### BRIEF DESCRIPTION OF THE DRAWINGS

The present invention will hereinafter be explained in greater detail by means of nonlimiting examples and with reference to the appended drawings in which:
- Fig. 1: discloses an embodiment of the present invention in a comfort configuration;
- Fig. 2: discloses the Fig. 1 embodiment in a crash configuration;
- Fig. 3: discloses a portion of the Fig. 1 embodiment, as seen from above;
- Fig. 4a - 4b: discloses a portion of another embodiment of the present invention;
- Fig. 5a - 5c: discloses a portion of a further embodiment of the present invention;
- Fig. 6a - 6b: discloses a portion of another embodiment of the present invention;
- Fig. 7a - 7b: discloses a portion of a further embodiment of the present invention;
- Fig. 8a - 8b: discloses a portion of another embodiment of the present invention;
- Fig. 9a - 9b: discloses a portion of a further embodiment of the present invention, and
- Fig. 10: discloses an embodiment, namely a four point safety belt system, of the present invention in a comfort configuration.

It should be noted that the appended drawings are not necessarily drawn to scale and that the dimensions of some features of the present invention may have been exaggerated for the sake of clarity.

### DETAILED DESCRIPTION OF PREFERRED EMBODIMENTS

The invention will, in the following, be exemplified by embodiments. It is to be understood, however, that the embodiments are included in order to explain principles of the invention and not to limit the scope of the invention defined by the appended claims.

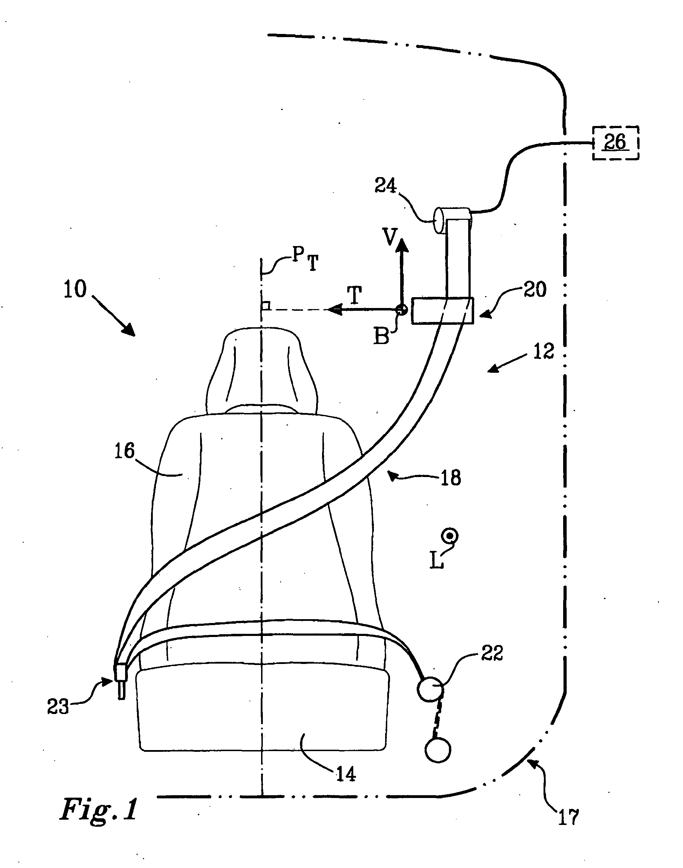

Fig. 1 illustrates a seat 10 provided with an embodiment of a safety belt system 12 according to the present invention. The seat 10 comprises a squab portion 14 and a backrest portion 16. The seat 10 has a vertical extension in a vertical direction V and a transversal extension L. As may be gleaned from Fig. 1, the vertical extension is directed from the squab portion 14 towards the backrest portion 16 of the seat 10. The seat 10 and the safety belt system 12 are preferably located in a vehicle 17 such as a car.

Moreover, the seat 10 has a vertically extending transversal centre plane P_{T} which, when a person occupies the seat, extends between the person's left and right hand sides. The seat 10 also has a longitudinal extension L which extension is perpendicular to both the vertical direction V and the transversal extension T.

When the seat 10 is mounted in a vehicle (not shown in Fig. 1), the longitudinal extension L generally coincides with the intended direction of travel of the vehicle. In such an implementation of the seat 10, the transversal centre plane P_{T} extends in a vertical direction and in the intended direction of travel of the vehicle.

As may be gleaned from Fig. 1, the safety belt system 12 comprises a belt 18, a first guide arrangement 20 and a second guide arrangement 22. Moreover, the safety belt system 12 is configured such that when the safety belt system 12 is mounted with a seat 10, the first and second guide arrangements 20, 22 are located on the same side of the transversal centre plane P_{T} and the first guide arrangement 20 is located above - i.e. on a higher level in the vertical direction V than - the second guide arrangement 22.

Fig. 1 further illustrates that the transversal direction T is perpendicular to the transversal centre plane P_{T} and extends in a direction from the first guide arrangement 20 towards the transversal centre plane P_{T}. Moreover, Fig. 1 also illustrates that the system 12 comprises a backward direction B extending from the first guide arrangement 20 in a direction perpendicular to both the vertical direction V and the transversal direction T such that vertical direction V, the transversal direction T and the backward direction B together form a right-handed system.

As may be realized from Fig. 1, the backward direction B is generally the inverse direction of the longitudinal extension L. As such, when the seat 10 is mounted in a vehicle 17, the backward direction B generally is the inverse direction of the intended direction of travel of the vehicle.

The first guide arrangement 20 may be attached to the seat 10 or a component of the vehicle (not shown) in which the seat 10 is located. Purely by way of example, the first guide arrangement 20 may be attached to a pillar, such as a B or C pillar, of a vehicle.

Moreover, the Fig. 1 embodiment of the present invention comprises a third guide arrangement 23 and the illustrated safety belt system 12 is configured such that when the safety belt system is mounted with a seat 10, the third guide arrangement 23 is located on the opposite side of the transversal centre plane P_{T} as compared to the first and second guide arrangements 20, 22.

Further, the safety belt system 12 further comprises a safety belt tensioner 24 adapted to tension the belt 18 in the event of a crash. In the embodiment of the present invention illustrated in Fig. 1, the safety belt tensioner 24 is located by the first guide arrangement 20 such that - when following the extension of the safety belt 18 from the safety belt tensioner - components of the safety belt system 12 are arranged in the following order: the safety belt tensioner 24, the first guide arrangement 20, the third guide arrangement 23 and the second guide arrangement 22. However, other embodiments of the present invention may have the components arranged in another order. Purely by way of example, the safety belt tensioner 24 may be located by the second guide arrangement 22. Furthermore, the safety belt 18 of the safety belt system 12 may be connected to more than one safety belt tensioner (not shown in Fig. 1).

Moreover, in the Fig. 1 embodiment of the present invention, the safety belt tensioner 24 is located above the first guide arrangement 20. However, in other embodiments of the present invention, the safety belt tensioner 24 may be located on the same level, or below, the first guide arrangement 20.

The safety belt tensioner 24 may be implemented in a plurality of different ways. Purely by way of example, the safety belt tensioner may be actuated by pyrotechnic, hydraulic and/or electric means in order to tension, often by retraction of, the safety belt 18. Generally, the safety belt tensioner is in communication with a crash sensor 26. Again purely by way of example, the safety belt tensioner 24 may be adapted to tension the safety belt 18 such that a tension force of approximately 2 kN is obtained in the belt 18.

Depending on the implementation thereof, the safety belt tensioner 24 may be adapted to reversibly or irreversibly tension the belt 18.

In an implementation of the crash sensor 26 and the safety belt tensioner 24 assembly, the crash sensor 26 is adapted to detect an imminent and/or occurring crash situation. Whenever such a crash situation is detected, the crash sensor 26 may communicate with the safety belt tensioner 24 such that it is actuated to tension the safety belt 18.

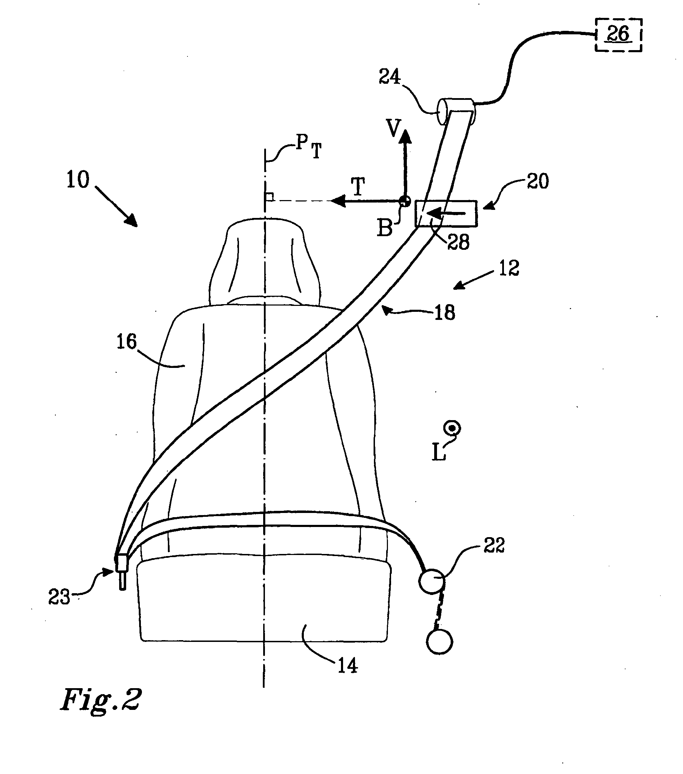

Fig. 2 illustrates the Fig. 1 embodiment of the present invention when the safety belt tensioner 24 has been actuated. As may be gleaned from Fig. 2, the first guide arrangement 20 is configured such that it allows at least a belt portion 28 of the belt 18, which belt portion 28 is in contact with the first guide arrangement 20, to be displaced in a direction at least partially coinciding with the transversal direction T and/or the backward direction B.

In the embodiment illustrated in Fig. 2, the belt portion 28 is arranged to be displaced at least partially towards the transversal centre plane P_{T} in the transversal direction T when the vehicle 17 is about to be involved in an impending crash situation.

Thus, when the safety belt tensioner tensions the belt 18, the safety belt assumes a crash configuration which is appropriate from an injury prevention point of view since a portion of the safety belt which is adapted to extend over an occupant's torso will be raised such that its upper portion will be located closer to the neck of the occupant, as compared to the comfort configuration illustrated in Fig. 1.

In order to obtain an appropriate distinction between the comfort configuration and the crash configuration, the first guide arrangement may be adapted to allow a displacement of the belt portion 28 in a direction at least partially coinciding with the transversal direction T and/or the backward direction B which is at least 0.2 times, preferably at least 0.4 times and more preferred at least 0.6 times, the width of the belt portion 28. To this end, it should be noted that a safety belt generally has a width of 4 - 8 cm.

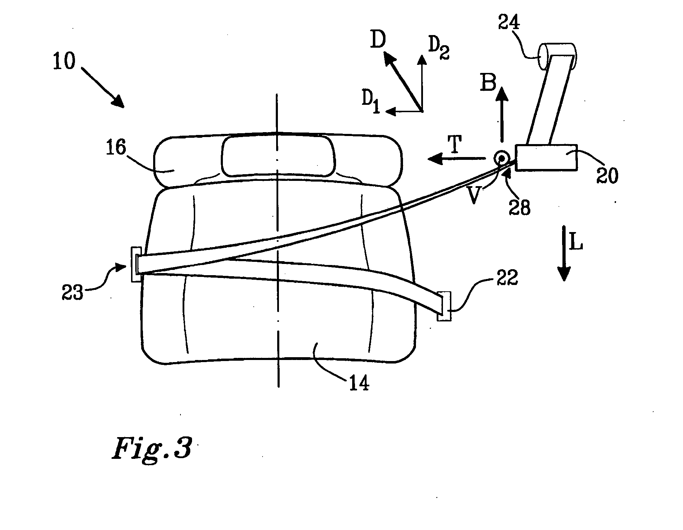

Fig. 3 is a top view of a portion of the Fig. 1 seat 10 with the safety belt system. Fig. 3 illustrates the transversal direction T, the backward direction B, the vertical direction V and the longitudinal direction L of the system 12. Moreover, Fig. 3 illustrates a displacement direction D having a first horizontal component D₁ which coincides with, i.e. is parallel with and extends in the same direction as, the transversal direction T and a second horizontal component D₂ which coincides with the backward direction B. As such, a displacement direction which is "at least partially coinciding with the transversal direction T and/or said backward direction B" is intended to encompass displacement directions D wherein:
- the displacement direction D has a horizontal component which coincides with the transversal direction T;
- the displacement direction D has a horizontal component which coincides with the backward direction B, or
- the displacement direction D has a first horizontal component D₁ which coincides with the transversal direction T and a second horizontal component D₂ which coincides with the backward direction B.

A "horizontal component" is intended to encompass components which extend in a direction perpendicular to the vertical extension V.

The first belt portion 28 may, in some embodiments of the present invention, be displaced in a displacement direction D which also has a vertical component, i.e. a component which is parallel to the vertical direction V. In the embodiments of the present invention presented hereinbelow, the displacement direction is generally coinciding with the transversal direction T but any one of the below embodiments could be adjusted so as to achieve a displacement direction D which coincides with the backward direction B or which has a first component D₁ which coincides with the transversal direction T and a second component D₂ which coincides with the backward direction B.

Embodiments of safety belt systems configured to assume a comfort configuration as well as a crash configuration will be presented hereinbelow.

In the first group of embodiments of the present invention presented hereinbelow, the first guide arrangement comprises a first guide point and may be configured such that the first guide point is displaced together with the belt portion of the belt when the safety belt tensioner tensions the belt.

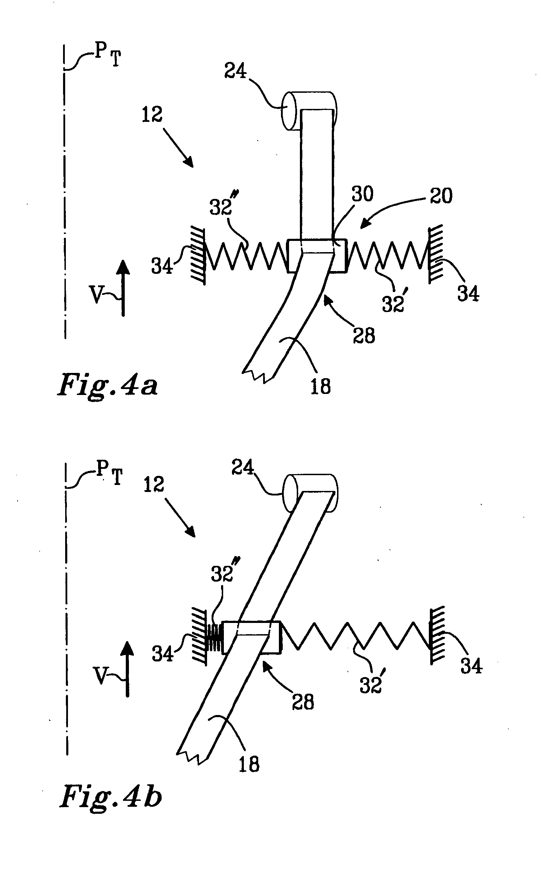

Fig. 4a and Fig. 4b illustrate a portion of an embodiment of a safety belt system of the present invention. Fig. 4a illustrates the embodiment in a comfort configuration. As may be gleaned from Fig. 4a, the safety belt system 12 illustrated therein comprises a first guide arrangement 20 which in turn comprises a first guide point 30. The first guide point 30 is in Fig. 4a implemented as a chaser through which at least a portion of the safety belt 18 runs. The chaser may be closed such that it circumscribes a portion of the safety belt or it may be open such that the belt may be guided in and out of the chaser. If the chaser is open, the opening thereof is preferably facing away from the transversal centre plane P_{T}. Moreover, the Fig. 4a embodiment of the present invention comprises resilient means, which is implemented as two springs 32', 32" in Fig. 4a, connected to the first guide point 30. Fig. 4a also illustrates that the resilient means extends between the first guide point 30 and a support member 34. As such, the two springs 32', 32" may be regarded as forming part of a compliant portion of the first guide arrangement 20 in the Fig. 4a and Fig. 4b embodiment.

The support member 34 may be rigidly connected to at least one of a component of the first guide arrangement 20, the seat 10 or another portion of a vehicle (not shown). In the implementation of the resilient means illustrated in Fig. 4a, the springs 32', 32" extends substantially horizontally, i.e. in a direction substantially perpendicular to the vertical direction V, and the resilient means comprises an inner spring 32" located between the first guide point 30 and the transversal centre plane P_{T} and an outer spring 32' which is located on the opposite side of the first guide point 30.

Fig. 4b illustrates the Fig. 4a embodiment when the safety belt tensioner 24 has been actuated so as to tension the safety belt 18. As may be gleaned from Fig. 4b, following the tensioning of the safety belt 18, the inner spring 32" is compressed whereas the outer spring 32' is extended such that the first guide point 30 is displaced towards the transversal centre plane P_{T}.

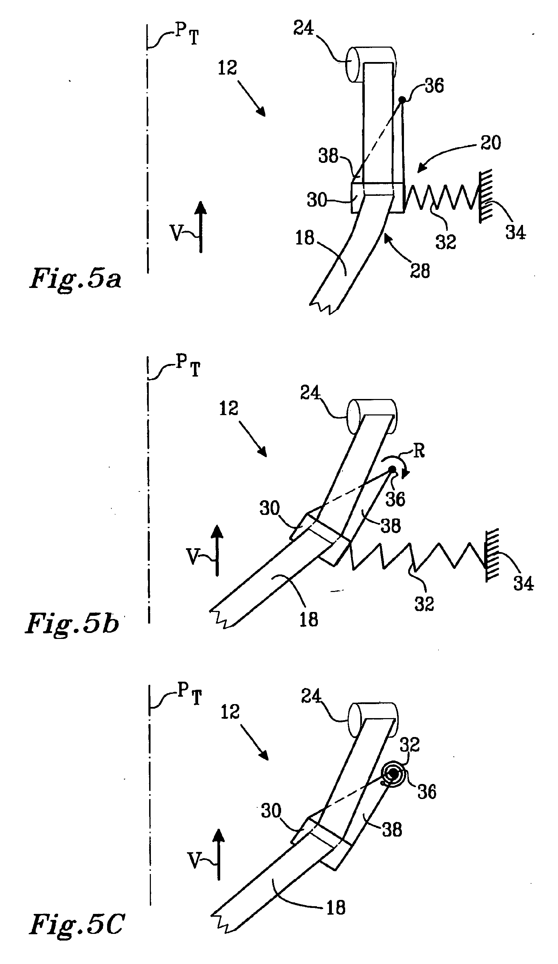

Fig. 5a and Fig. 5b illustrate a portion of another embodiment of a safety belt system of the present invention. In Fig. 5a, the first guide arrangement comprises the first guide point 30, which again is implemented as a chaser, which is pivotally connected to a pivot 36. In the implementation illustrated in Fig. 5a, the first guide point 30 is pivotally connected to the pivot via a lever 38. A resilient means 32 is connected to the first guide point 30, either directly or indirectly, such that the first guide point 30 may be kept substantially in the position illustrated in Fig. 5a during e.g. normal driving conditions.

When the safety belt tensioner 24 has been actuated so as to tension the safety belt 18, at least the first guide point 30 pivots in a direction as indicated by arrow R in Fig. 5b since the resilient means 32 yields. The implementation of the resilient means 32 illustrated in Fig. 5b is a spring directly or indirectly connected with the first guide point 30 and a support member 34. However, Fig. 5c illustrates an alternative, and also preferred, implementation of the resilient means 32, viz a torsion spring. In one implementation of a torsion spring arrangement, one end of the torsion spring may be connected to the guide point 30 whereas the other may be connected to a support member, such as a portion of the first guide arrangement 20, which is prevented from rotation around the pivot 36.

As such, the resilient means 32, for instance the torsion spring in Fig. 5c, may be regarded as forming part of a compliant portion of the first guide arrangement 20 in the Fig. 5a to 5c embodiment.

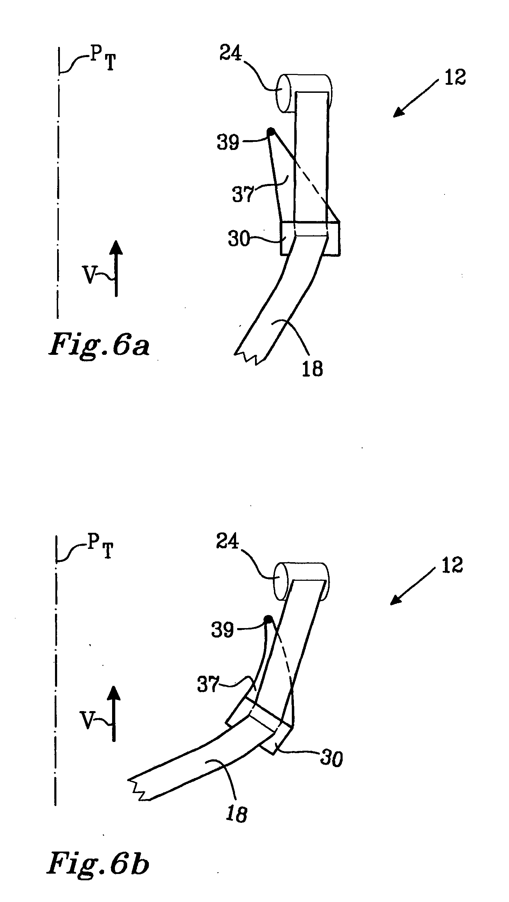

Instead of providing resilient means 32 and a pivot 36 as discussed hereinabove, a first guide point 30 may be connected to a connection means 39, such as bolt, rivet, weld joint etcetera, via a deflectable member 37. Purely by way of example, the deflectable member 37 may be made of a plastics material and/or a metal and the deflectable member 37 is adapted to be bent inwards and/or backwards, e.g. in a direction towards the transversal centre plane P_{T}, when the safety belt tensioner 24 tensions the safety belt 18, see Figs. 6a and 6b.

As such, the deflectable member 37 may be regarded as forming part of a compliant portion of the first guide arrangement 20 in the Fig. 6a and Fig. 6b embodiment.

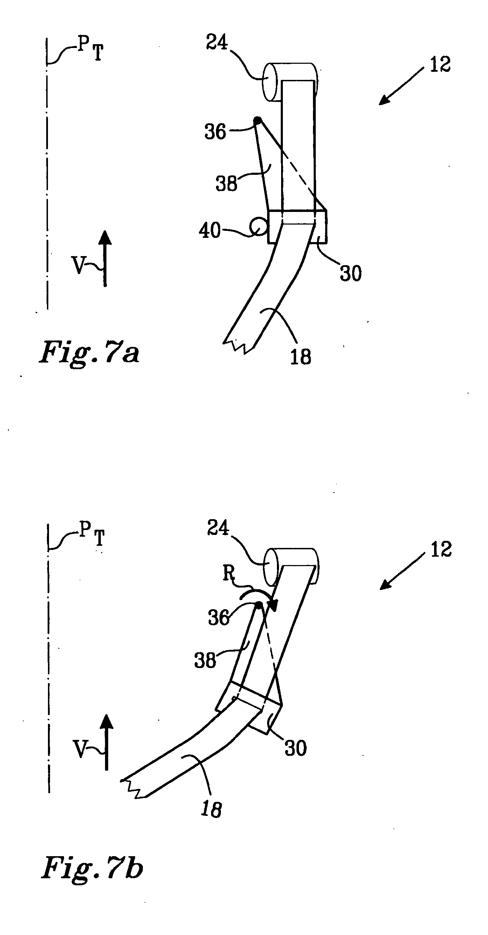

Fig. 7a and 7b illustrate a portion of a further embodiment of a safety belt system of the present invention. In a similar vein as for the Fig. 4a and 4b embodiment, the Fig. 7a and 6b embodiment comprises a first guide point 30, again exemplified by a closed or open chaser, pivotally connected to a pivot 38 via a lever 36. The present embodiment further comprises a locking means 40, exemplified with a break pin in Fig. 7a and 7b, adapted to prevent a displacement of the first guide point 30 towards the transversal centre plane P_{T} during normal driving conditions, i.e. when the safety belt tensioner has not been activated. The locking means 40 may be regarded as forming part of a compliant portion of the first guide arrangement 20 in the Fig. 7a and 7b embodiment.

In the implementation of the locking means 40 illustrated in Fig. 7a and 7b, the break pin 40 is located so as to abut a portion of the first guide point 30, but in other implementations, the break pin 40 may be in contact, directly or indirectly, with other portions of the first guide arrangement 20 to thereby prevent a displacement of the first guide point 30 towards the transversal centre plane P_{T}.

Fig. 7b illustrates a portion of the present embodiment when the safety belt tensioner has been actuated 24 to thereby tension the safety belt 18. The tensioning of the safety belt 18 imparts a load on the break pin 40 which results in that the break pin 40 breaks and the first guide point 30 is displaced towards the transversal centre plane P_{T} due to the rotation in the direction R of the lever 36 and the first guide point 30.

Purely by way of example, the first guide point 30 and the lever 38 may be made of a plastics material and may also form a unitary component. Moreover, and again purely by way of example, the lever 38 may have length, i.e. an extension between the pivot 36 and the first guide point 30, such that the distance from the pivot 36 to the first guide point 30 is within the range of 5 - 20 cm, preferably within the range of 8 - 15 cm.

It should be noted that although the locking means 40 has been exemplified by a break pin in Fig. 7a and 7b, the locking means 40 may be implemented in other ways in other embodiments of the present invention. Purely by way of example, the locking means 40 may comprise a locking device such as a pawl (not shown) which retains the first guide point 30 in position during normal driving conditions. Such a locking device may be in communication with the Fig. 1 crash sensor 26. As such, if a crash situation is detected, the crash sensor 26 may communicate with the locking device such that the first guide point 30 is released and subsequently displaced towards the transversal centre plane P_{T}.

It should be noted that a locking means 40 as described hereinabove may be used instead of, or in addition to, the resilient means in any one of the embodiments of the present invention illustrated in Fig. 4a to Fig. 7b.

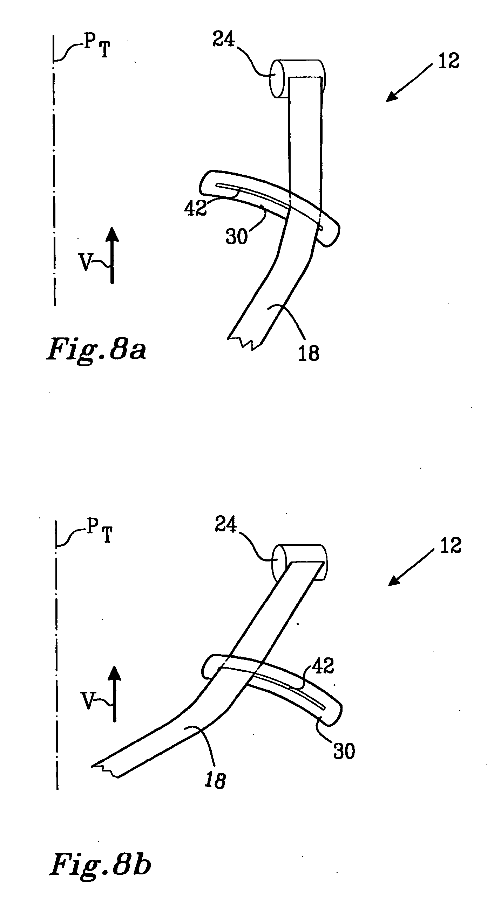

Figs. 8a and 8b illustrate a portion of a further embodiment of the present invention. As may be gleaned from Fig. 8a, the first guide arrangement 20 in the illustrated embodiment comprises a slot 42 through which a portion of the safety belt 18 extends. The slot 42 has an extension in at least a direction perpendicular to the transversal centre plane P_{T} which extension is at least 2 times, preferably 3 times, greater than the width of the belt. Moreover, the Fig. 8a slot preferably is inclined in relation to a horizontal plane, i.e. a plane extending perpendicular to the vertical direction V, such that the portion of the slot 42 which is located towards the transversal centre plane P_{T} is above, i.e. on a higher elevation in the vertical extension, than the portion of the slot 42 which is located away from the transversal centre plane P_{T}. In the implementation if the slot 42 illustrated in Fig. 8a, the slot 42 is arcuate which is a preferred implementation of the slot 42.

During normal driving conditions, the safety belt 18 is, due to friction forces built up between the safety belt 18 and the circumference of the slot 42, kept in a position as illustrated in Fig. 8a. Thus, the safety belt 18 is retained in a portion of the slot 42 which is located away from the transversal centre plane P_{T}. When the safety belt tensioner 24 tensions the belt 18, the safety belt 18 slides in the slot 42 and is subsequently displaced towards the transversal centre plane P_{T} and assumes a crash configuration in which the safety belt 18 extends through the slot 42 at a portion thereof which is located towards the transversal centre plane P_{T}. The slot 42 may be regarded as forming part of a compliant portion of the first guide arrangement 20 in the Fig. 8a and 8b embodiment.

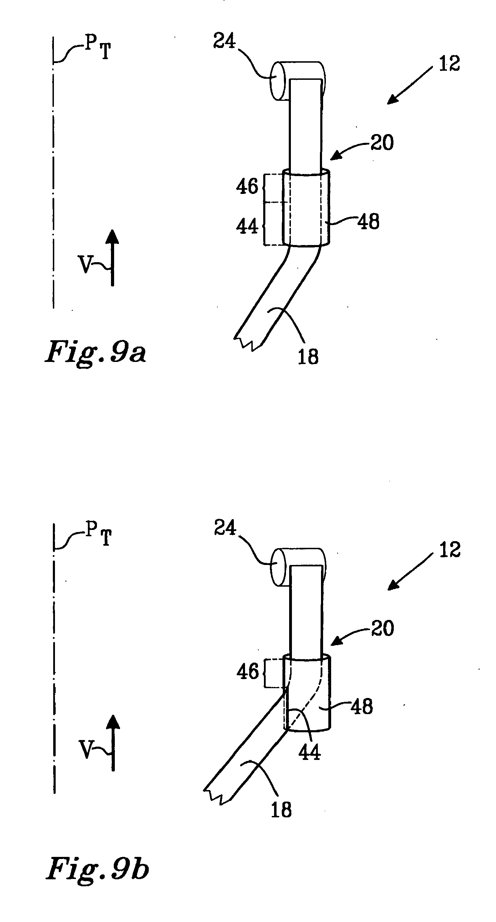

Figs. 9a and 9b illustrate a portion of a further embodiment of the present invention. In Fig. 9a, the first guide arrangement 20 comprises a first wall portion 44 adapted to be located between the belt 18 and the transversal centre plane P_{T}. The first wall portion 44 is adapted to rupture when the safety belt tensioner 24 tensions the belt 18. In the implementation of the first guide arrangement 20 illustrated in Fig. 9a, the first wall portion 44 forms part of a housing 48 through which a portion of the safety belt 18 extends. The first wall portion 44 preferably comprises a weakening such that it ruptures in a controlled manner when the safety belt tensioner 24 is activated. Purely by way of example, the first wall portion may comprise perforations (not shown) and/or notches. Moreover, and again purely by way of example, the housing 48 may be made of a plastics material. The first wall portion may extend throughout the vertical extension of the housing 48 or, as in the implementation of the housing 48 illustrated in Fig. 9a, it may extend through only a portion of the vertical extension of the housing 48. In the latter implementation, the housing 48 comprises an upper wall portion 46 which is stronger than the first wall portion 44. As such, the upper wall portion 46 is adapted not to rupture when the safety belt tensioner 24 tensions the belt.

Fig. 9b illustrates the present embodiment of the invention when the safety belt tensioner 24 tensions the belt 18. As may be realized from Fig. 9b, when the safety belt 18 is tensioned the first wall portion 44 ruptures such that the safety belt 18 assumes a crash configuration. The first wall portion 44 may be regarded as forming part of a compliant portion of the first guide arrangement 20 in the Fig. 9a and 9b embodiment.

While there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention.

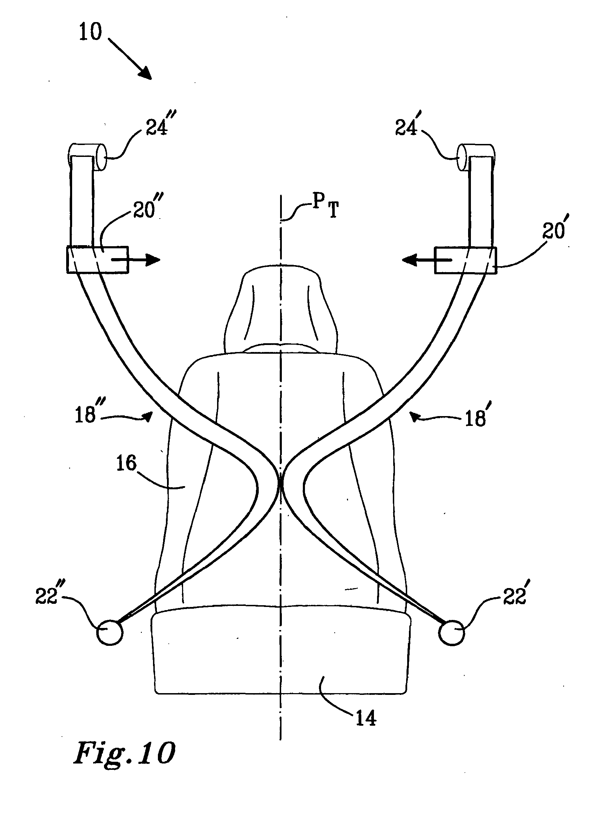

Furthermore, although the embodiments hereinabove relate to a three point belt system, the invention is also applicable to other types of safety belt systems. To this end, reference is made to Fig. 10 illustrating an embodiment of the present invention. As may be gleaned from Fig. 10, the safety belt system 12 disclosed therein is a four point belt system. The four point belt system comprises two safety belts 18', 18", each one of which being connected to a separate safety belt tensioner 24', 24" and a first guide arrangement 20', 20". Each one of the first guide arrangements 20', 20" is adapted to allow a displacement of the corresponding safety belt 18', 18" towards the transversal centre plane P_{T} when the safety belt tensioners 24', 24" tensions the belts 18', 18". However, in other embodiments of the safety belt system 12 of the present invention, a four point safety belt may be provided with fewer or more safety belt tensioners and/or first guide arrangements configured so as to displace a portion of the corresponding safety belt towards the transversal centre plane P_{T}. Purely by way of example, only one 18' belt of a four point safety belt system 12 may be connected to a first guide arrangements 20' adapted to allow the inward, i.e. towards the transversal centre plane P_{T}, displacement of a safety belt portion.

Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A safety belt system (12) for a seat (10), said seat (10) having a vertical extension in a vertical direction (V) and a transversal centre plane (P_{T}) which, when a person occupies said seat, extends vertically between the person's left and right hand sides, said safety belt system (12) comprising a belt (18), a first guide arrangement (20) and a second guide arrangement (22), said safety belt system (12) being configured such that when said safety belt system (12) is mounted with a seat (10), said first and second guide arrangements (20, 22) are located on the same side of said transversal centre plane (P_{T}) and said first guide arrangement (20) is located above said second guide arrangement (22), said system (12) further comprising a transversal direction (T) being perpendicular to said transversal centre plane (P_{T}) and extending from said first guide arrangement (20) towards said transversal centre plane (P_{T}), said system further comprising a backward direction (B) extending from said first guide arrangement (20) in a direction perpendicular to both said vertical direction (V) and said transversal direction (T) such that said vertical direction (V), said transversal direction (T) and said backward direction (B) together form a right-handed system, said safety belt system (12) further comprising a safety belt tensioner (24) adapted to tension said belt (18) in the event of a crash,
said first guide arrangement (20) comprises a compliant portion (32', 32"; 32; 37; 40; 42) such that said first guide arrangement (20) allows at least a belt portion (28) of said belt (18), which belt portion (28) is in contact with said first guide arrangement (20), to be displaced in a direction at least partially coinciding with said transversal direction (T) and/or said backward direction (B) when said reversible safety belt tensioner (24) tensions said belt (18),
**characterized in that**
said safety belt tensioner (24) is located on the same side of said transversal centre plane (P_{T}) as said first and second guide arrangements (20, 22), wherein components of said safety belt system (12) are arranged in the following order:
said safety belt tensioner (24), said first guide arrangement (20) and said second guide arrangement (22), when following the extension of said safety belt (18) from said safety belt tensioner (24).

2. The safety belt system (12) according to claim 1, wherein said safety belt tensioner (24) is located by said first guide arrangement (20).

3. The safety belt system (12) according to any one of the preceding claims, wherein said first guide arrangement (20) is adapted to allow a displacement of said belt portion in a direction in a direction at least partially coinciding with said transversal direction (T) and/or said backward direction (B) which is at least 0.2 times the width of said belt portion (18).

4. The safety belt system (12) according to any one of the preceding claims, wherein said first guide arrangement (20) comprises a first guide point (30) and is configured such that said first guide point (30) is displaced together with a belt portion (28) of said belt (18) when said safety belt tensioner (24) tensions said belt (18).

5. The safety belt system (12) according to claim 4, wherein said first guide arrangement (20) comprises a resilient means (32) adapted to allow said displacement of said first guide point (30) when said safety belt tensioner (24) tensions said belt (18).

6. The safety belt system (12) according to claim 4 or 5, wherein said first guide arrangement (20) is adapted to pivot to thereby achieve said displacement of said first guide point (30) when said safety belt tensioner (24) tensions said belt (18).

7. The safety belt system (12) according to claim 6, when dependent on claim 5, wherein said resilient means (32) comprises a torsion spring.

8. The safety belt system (12) according to any one of the preceding claims, wherein said first guide arrangement (20) comprises a breakpin (40) adapted to break when said safety belt tensioner (24) tensions said belt (18).

9. The safety belt system (12) according to any one of the preceding claims, wherein said first guide arrangement (20) comprises a slot (42) having an extension in at least a direction at least partially coinciding with said transversal direction (T) and/or said backward direction (B) which extension is at least 2 times, preferably 3 times, greater than the width of said belt (18).

10. The safety belt system (12) according to any one of the preceding claims, wherein said first guide arrangement (20) comprises a first wall portion (44) adapted to be located between belt portion (28) and said transversal centre plane (P_{T}), said first wall portion (44) being adapted to rupture when said safety belt tensioner (24) tensions said belt (18).

11. The safety belt system (12) according to claim any one of the preceding claims, wherein said safety belt system (12) further comprises a third guide arrangement (23), said safety belt system (12) being configured such that when said safety belt (18) system is mounted with a seat, said third guide arrangement (23) is located on the opposite side of said transversal centre plane (P_{T}) compared to said first and second guide arrangements (20, 22).

12. The safety belt system (12) according to any one of the preceding claims, wherein said at least a belt portion (28) of said belt (18) is adapted to be to be displaced in a direction at least partially towards said transversal centre plane (P_{T}) when said safety belt tensioner (24) tensions said belt (18).

13. A seat assembly, preferably a vehicle seat assembly, comprising a seat (10) and a safety belt system (12) according to any one of the preceding claims.

14. A vehicle, comprising a seat assembly according to claim 13 and/or a safety belt system (12) according to any one of claims 1 to 12.

## Patentansprüche

1. Sicherheitsgurtsystem (12) für einen Sitz (10), wobei der Sitz (10) eine vertikale Erstreckung in einer vertikalen Richtung (V) und eine Quermittelebene (P_{T}), die sich, wenn eine Person den Sitz einnimmt, vertikal zwischen der linken und der rechten Seite der Person erstreckt, aufweist, wobei das Sicherheitsgurtsystem (12) einen Gurt (18), eine erste Führungsanordnung (20) und eine zweite Führungsanordnung (22) umfasst, wobei das Sicherheitsgurtsystem (12) so konfiguriert ist, dass, wenn das Sicherheitsgurtsystem (12) mit einem Sitz (10) verbaut ist, sich die erste und zweite Führungsanordnung (20, 22) auf derselben Seite der Quermittelebene (P_{T}) befinden und sich die erste Führungsanordnung (20) über der zweiten Führungsanordnung (22) befindet, wobei das System (12) ferner eine Querrichtung (T) umfasst, die senkrecht zur Quermittelebene (P_{T}) ist und sich von der ersten Führungsanordnung (20) zur Quermittelebene (P_{T}) erstreckt, wobei das System ferner eine Rückwärtsrichtung (B) umfasst, die sich von der ersten Führungsanordnung (20) in einer senkrecht zu sowohl der vertikalen Richtung (V) als auch der Querrichtung (T) verlaufenden Richtung erstreckt, so dass die vertikale Richtung (V), die Querrichtung (T) und die Rückwärtsrichtung (B) zusammen ein Rechtssystem bilden, wobei das Sicherheitsgurtsystem (12) ferner einen Sicherheitsgurtstraffer (24) umfasst, der dazu ausgeführt ist, den Gurt (18) im Falle eines Aufpralls zu spannen, die erste Führungsanordnung (20) einen nachgiebigen Teil (32', 32"; 32; 37; 40; 42) umfasst, so dass, die erste Führungsanordnung (20) es ermöglicht, dass zumindest ein mit der ersten Führungsanordnung (20) in Berührung stehender Gurtteil (28) des Gurts (18) in einer Richtung, die zumindest teilweise mit der Querrichtung (T) und/oder der Rückwärtsrichtung (B) zusammenfällt, bewegt werden kann, wenn der reversible Sicherheitsgurtstraffer (24) den Gurt (18) spannt
**dadurch gekennzeichnet, dass**
sich der Sicherheitsgurtstraffer (24) auf derselben Seite der Quermittelebene (P_{T}) befindet wie die erste und zweite Führungsanordnung (20, 22), wobei die Komponenten des Sicherheitsgurtsystems (12) der Erstreckung des Sicherheitsgurts (18) von dem Sicherheitsgurtstraffer (24) aus folgend in der folgenden Reihenfolge angeordnet sind: der Sicherheitsgurtstraffer (24), die erste Führungsanordnung (20) und die zweite Führungsanordnung (22).

2. Sicherheitsgurtsystem (12) nach Anspruch 1, wobei sich der Sicherheitsgurtstraffer (24) nahe der ersten Führungsanordnung (20) befindet.

3. Sicherheitsgurtsystem (12) nach einem der vorhergehenden Ansprüche, wobei die erste Führungsanordnung (20) dazu ausgelegt ist, eine Bewegung des Gurtteils in einer Richtung, die zumindest teilweise mit der Querrichtung (T) und/oder der Rückwärtsrichtung (B) zusammenfällt, wobei es sich um mindestens das 0,2-Fache der Breite des Gurtteils (28) handelt, zu gestatten.

4. Sicherheitsgurtsystem (12) nach einem der vorhergehenden Ansprüche, wobei die erste Führungsanordnung (20) einen ersten Führungspunkt (30) umfasst und so konfiguriert ist, dass der erste Führungspunkt (30) zusammen mit einem Gurtteil (28) des Gurts (18) bewegt wird, wenn der Sicherheitsgurtstraffer (24) den Gurt (18) spannt.

5. Sicherheitsgurtsystem (12) nach Anspruch 4, wobei die erste Führungsanordnung (20) ein elastisches Mittel (32) umfasst, das dazu ausgeführt ist, eine Bewegung des ersten Führungspunkts (30) zu gestatten, wenn der Sicherheitsgurtstraffer (24) den Gurt (18) spannt.

6. Sicherheitsgurtsystem (12) gemäß Anspruch 4 oder 5, wobei die erste Führungsanordnung (20) dazu ausgeführt ist, zu schwenken, um dadurch die Bewegung des ersten Führungspunkts (30), wenn der Sicherheitsgurtstraffer (24) den Gurt (18) spannt, zu erzielen.

7. Sicherheitsgurtsystem (12) nach Anspruch 6, sofern von Anspruch 5 abhängig, wobei das elastische Mittel (32) eine Torsionsfeder umfasst.

8. Sicherheitsgurtsystem (12) nach einem der vorhergehenden Ansprüche, wobei die erste Führungsanordnung (20) einen Bruchstift (40) umfasst, der dazu ausgelegt ist, zu brechen, wenn der Sicherheitsgurtstraffer (24) den Gurt (18) strafft.

9. Sicherheitsgurtsystem (12) nach einem der vorhergehenden Ansprüche, wobei die erste Führungsanordnung (20) einen Schlitz (20) umfasst, der eine Erstreckung in mindestens eine Richtung aufweist, die zumindest teilweise mit der Querrichtung (T) und/oder der Rückwärtsrichtung (B) zusammenfällt, wobei die Erstreckung um zumindest das 2-Fache, vorzugsweise das 3-Fache, größer als die Breite des Gurts (18) ist.

10. Sicherheitsgurtsystem (12) nach einem der vorhergehenden Ansprüche, wobei die erste Führungsanordnung (20) einen ersten Wandteil (44) umfasst, der dazu ausgelegt ist, sich zwischen dem Gurtteil (28) und der Quermittelebene (PT) zu befinden, wobei der erste Wandteil (44) dazu ausgelegt ist durchzubrechen, wenn der Sicherheitsgurtspanner (24) den Gurt (18) spannt.

11. Sicherheitsgurtsystem (12) nach einem der vorhergehenden Ansprüche, wobei das Sicherheitsgurtsystem (12) ferner eine dritte Führungsanordnung (23) umfasst, wobei das Sicherheitsgurtsystem (12) derart konfiguriert ist, dass sich, wenn das Sicherheitsgurtsystem (12) mit einem Sitz verbaut ist, die dritte Führungsanordnung (23) sich im Vergleich zu der ersten und zweiten Führungsanordnung (20, 22) auf der gegenüberliegenden Seite der Quermittelebene (PT) befindet.

12. Sicherheitsgurtsystem (12) nach einem der vorhergehenden Ansprüche, wobei der mindestens eine Gurtteil (28) des Gurts (18) dazu ausgelegt ist, in einer zumindest teilweise zur Quermittelebene (PT) hin verlaufenden Richtung verschoben zu werden, wenn der Sicherheitsgurtstraffer (24) den Gurt (18) spannt.

13. Sitzanordnung, vorzugsweise eine Fahrzeugsitzanordnung die einen Sitz (10) und ein Sicherheitsgurtsystem (12) nach einem der vorhergehenden Ansprüche umfasst.

14. Fahrzeug, das eine Sitzanordnung nach Anspruch 13 und/oder ein Sicherheitsgurtsystem (12) nach einem der Ansprüche 1 bis 12 umfasst.

## Revendications

1. Système de ceinture de sécurité (12) pour un siège (10), ledit siège (10) ayant une étendue verticale dans une direction verticale (V) et un plan médian transversal (P_{T}) qui, lorsqu'une personne occupe ledit siège, s'étend verticalement entre les côtés gauche et droit de la personne, ledit système de ceinture de sécurité (12) comprenant une ceinture (18), un premier agencement de guidage (20) et un deuxième agencement de guidage (22), ledit système de ceinture de sécurité (12) étant configuré de telle sorte que, lorsque ledit système de ceinture de sécurité (12) est monté avec un siège (10), lesdits premier et deuxième agencements de guidage (20, 22) soient situés sur le même côté dudit plan médian transversal (P_{T}) et ledit premier agencement de guidage (20) soit situé au-dessus dudit deuxième agencement de guidage (22), ledit système (12) comprenant en outre une direction transversale (T) perpendiculaire audit plan médian transversal (P_{T}) et s'étendant à partir dudit premier agencement de guidage (20) vers ledit plan médian transversal (P_{T}), ledit système comprenant en outre une direction arrière (B) s'étendant à partir dudit premier agencement de guidage (20) dans une direction perpendiculaire à la fois à ladite direction verticale (V) et à ladite direction transversale (T) de telle sorte que ladite direction verticale (V), ladite direction transversale (T) et ladite direction arrière (B) forment ensemble un repère direct, ledit système de ceinture de sécurité (12) comprenant en outre un tendeur de ceinture de sécurité (24) conçu pour tendre ladite ceinture (18) en cas d'accident, ledit premier agencement de guidage (20) comprend une partie souple (32', 32"; 32; 37; 40; 42) de telle sorte que ledit premier agencement de guidage (20) permette de déplacer au moins une partie ceinture (28) de ladite ceinture (18), ladite partie ceinture (28) étant en contact avec ledit premier agencement de guidage (20), dans une direction coïncidant au moins partiellement avec ladite direction transversale (T) et/ou ladite direction arrière (B) lorsque ledit tendeur de ceinture de sécurité réversible (24) tend ladite ceinture (18)
**caractérisé en ce que**
ledit tendeur de ceinture de sécurité (24) est situé sur le même côté dudit plan médian transversal (P_{T}) que lesdits premier et deuxième agencements de guidage (20, 22), lesdits composants dudit système de ceinture de sécurité (12) étant disposés dans l'ordre suivant : ledit tendeur de ceinture de sécurité (24), ledit premier agencement de guidage (20) et ledit deuxième agencement de guidage (22), en suivant l'étendue de ladite ceinture de sécurité (18) à partir dudit tendeur de ceinture de sécurité (24).

2. Système de ceinture de sécurité (12) selon la revendication 1, ledit tendeur de ceinture de sécurité (24) étant situé à côté dudit premier agencement de guidage (20).

3. Système de ceinture de sécurité (12) selon l'une quelconque des revendications précédentes, ledit premier agencement de guidage (20) étant conçu pour permettre un déplacement de ladite partie ceinture dans une direction coïncidant au moins partiellement avec ladite direction transversale (T) et/ou ladite direction arrière (B) d'une ampleur correspondant à au moins 0,2 fois la largeur de ladite partie ceinture (28).

4. Système de ceinture de sécurité (12) selon l'une quelconque des revendications précédentes, ledit premier agencement de guidage (20) comprenant un premier point de guidage (30) et étant configuré de telle sorte que ledit premier point de guidage (30) soit déplacé conjointement avec une partie ceinture (28) de ladite ceinture (18) lorsque ledit tendeur de ceinture de sécurité (24) tend ladite ceinture (18).

5. Système de ceinture de sécurité (12) selon la revendication 4, ledit premier agencement de guidage (20) comprenant un moyen élastique (32) conçu pour permettre ledit déplacement dudit premier point de guidage (30) lorsque ledit tendeur de ceinture de sécurité (24) tend ladite ceinture (18).

6. Système de ceinture de sécurité (12) selon la revendication 4 ou 5, ledit premier agencement de guidage (20) étant conçu pour pivoter pour réaliser ainsi ledit déplacement dudit premier point de guidage (30) lorsque ledit tendeur de ceinture de sécurité (24) tend ladite ceinture (18).

7. Système de ceinture de sécurité (12) selon la revendication 6, lorsqu'elle dépend de la revendication 5, ledit moyen élastique (32) comprenant un ressort de torsion.

8. Système de ceinture de sécurité (12) selon l'une quelconque des revendications précédentes, ledit premier agencement de guidage (20) comprenant une goupille frangible (40) conçue pour casser lorsque ledit tendeur de ceinture de sécurité (24) tend ladite ceinture (18).

9. Système de ceinture de sécurité (12) selon l'une quelconque des revendications précédentes, ledit premier agencement de guidage (20) comprenant une fente (42) ayant une étendue dans au moins une direction coïncidant au moins partiellement avec ladite direction transversale (T) et/ou ladite direction arrière (B), ladite étendue étant au moins 2 fois, de préférence 3 fois, supérieure à la largeur de ladite ceinture (18).

10. Système de ceinture de sécurité (12) selon l'une quelconque des revendications précédentes, ledit premier agencement de guidage (20) comprenant une première partie paroi (44) conçue pour être placée entre la partie ceinture (28) et ledit plan médian transversal (P_{T}), ladite première partie paroi (44) étant conçue pour se rompre lorsque ledit tendeur de ceinture de sécurité (24) tend ladite ceinture (18).

11. Système de ceinture de sécurité (12) selon l'une quelconque des revendications précédentes, ledit système de ceinture de sécurité (12) comprenant en outre un troisième agencement de guidage (23), ledit système de ceinture de sécurité (12) étant configuré de telle sorte que, lorsque ledit système de ceinture de sécurité (12) est monté avec un siège, ledit troisième agencement de guidage (23) soit situé sur le côté opposé dudit plan médian transversal (P_{T}) par rapport auxdits premier et deuxième agencements de guidage (20, 22).

12. Système de ceinture de sécurité (12) selon l'une quelconque des revendications précédentes, ladite ou lesdites parties ceinture (28) de ladite ceinture (18) étant conçues pour être déplacées dans une direction allant au moins partiellement vers ledit plan médian transversal (P_{T}) lorsque ledit tendeur de ceinture de sécurité (24) tend ladite ceinture (18).

13. Ensemble de siège, de préférence ensemble de siège de véhicule, comprenant un siège (10) et un système de ceinture de sécurité (12) selon l'une quelconque des revendications précédentes.

14. Véhicule, comprenant un ensemble de siège selon la revendication 13 et/ou un système de ceinture de sécurité (12) selon l'une quelconque des revendications 1 à 12.
